# EUROPEAN PATENT SPECIFICATION

(11) **EP 1 259 919 B1**
(45) Date of publication and mention of the grant of the patent: **27.04.2005**
(21) Application number: 01906512.7
(22) Date of filing: 19.02.2001
(51) Int. Cl.: G06F 17/60, G07G 1/00

(54) **DEVICE AND PROCESS FOR ENABLING VOLUNTARY EXCHANGE OF DATA FOR ELECTRONIC POINTS**
VORRICHTUNG UND VERFAHREN ZUM ERMÖGLICHEN EINES FREIWILLIGEN AUSTAUSCHES VON DATEN GEGEN ELEKTRONISCHE PUNKTE
DISPOSITIF ET PROCESSUS PERMETTANT L'ECHANGE VOLONTAIRE DE DONNEES DE POINTS ELECTRONIQUES

(30) Priority: 24.02.2000 SI 200000041; 20.07.2000 SI 200000170; 22.01.2001 SI 200100008
(43) Date of publication of application: 27.11.2002
(73) Proprietor: VDECA, d.o.o., 1000 Ljubljana (SI)
(72) Inventor: RUGELJ, Mitja, 1000 Ljubliana (SI)
(74) Representative: Kohlmann, Kai, Dipl.-Ing.
(86) International application number: PCT/SI2001/000006
(87) International publication number: WO 2001/063513

(56) References cited:
- EP-A- 0 786 746
- EP-A- 0 933 717
- WO-A-95/20294
- WO-A-96/26506
- WO-A-97/22074
- WO-A-98/12674
- WO-A-99/60503
- US-A- 5 835 087

## Description

The present invention relates to a device for enabling voluntary exchange of data for bonus points, including electronic points, comprising at least one central computer (DAC), at least one transaction provider device, and at least one identification device.

The invention solves the problem of establishing a device for voluntary exchange and collection of data on transactions together with personal data of a user, involved in these transactions. The purpose of the invention is exclusively legal collection of data, i.e. the collection of data with the knowledge and approval of the data owner, namely the person, who is allowed to dispose of these data legally and who must, as a precondition for the data collection and exchange for bonus points, approve their exchange by means of an electronic signature, self-sighting code (e.g. the so called PIN-code) or any other identification method (biometric identification). The essence of the invention is that the data owner is always awarded for the exchanged data and his approval for their use with appropriate bonus points. The data collected in this way could be beneficially used, e.g. by marketing research, by analysing the culture of the consumers in a certain segment, by analysing efficiency and consumption of certain medicaments and similar.

Besides this the invention enables the user that he makes his data available to persons interested in them without disclosing his own identity in this.

WO 99 60503 A discloses a demographic information gathering and incentive award system, which allows web site proprietors participating in the system to create a demographic profile of visitors of their web site and make sure that the right information goes to the right participant according to his/her profile or to link them to the appropriate web site. Visitors are for the visit of a web site and at the same time disclosure of demographic information awarded. Visitors are not awarded every time when they visit a web site and disclose their demographic information. The system disclosed in WO 99/60503 enable the web site proprietors to develop demographic profile of visitors of their web site and do a general analysis like, which demographic profile is most common between the visitors of their web site. The drawback of the known system is that it can not be distinguished between incidental visitors of the web site and those who visit the site on purpose and that they do not know anything about the "internet" behaviour of visitors. Furthermore the system limited the internet environment. With the known system it is not possible to collect demographic information and information about all and each web sites visits done by the participant. The more it is not possible to enrich the information about "internet behaviour" with the information about other activities done by the participant. On contrary the system described in WO 99/60503 is limited to the collection of demographic information to the visits of participating web sites.

The term "transaction" can be understood as any activity of the users, which can be written (captured) in an electronic form, as for example the purchase of goods in a shop, travelling by plane, road toll payment, bank service use, prescribing or administering medicaments, activities in connection with the use of certain appliances, such as the television set, telephone set, mobile telephone set, computer and similar.
The term "bonus points" can be understood as any form of award or compensation, by means of which the user is awarded in exchange for his approval regarding the data exchange. The award can be e.g. electronic points, which can be changed either into money or into a discount in a certain purchase or even also in any other kind of material award (e.g. a television set, a watch, a travel) or also into other kinds of benefits of certain financial value. The award can also be participation in a lottery, where the electronic points can be exchanged for lottery tickets, by means of which then the person is allowed to participate in the lottery. The points can be used also in a variety of already existing bonus schemes, such as bonus schemes of airline companies, hotel and shopping centre chains and similar. The bonus points can be written into a special database, which can be included in the so called "smart card" or in an appropriate computer, the so-called server.
The term" user" can be understood as anybody, involved in the transactions.
The term "data exchange" means transfer of data related to certain transaction together with the data related to the person, which performed the transaction or which was involved in it, to the said DAC or any other medium (e.g. to the so-called smart card), from which the data can be forwarded to DAC.

The term "DAC" is abbreviation from the English phrase Data Analysing Centre and means a central control unit, i.e. a computer having sufficient capacity in order to enable storing and/or combining and/or analysis and/or other processing of acquired data relating to transactions.
The term "transaction provider device" means any device, which enables collecting, i.e. capturing of data, i.e. writing or recording any information and other data relating to certain transaction in any manner which may be determined in advance. Such device enables also transferring the collected information and other data related to certain transaction either to DAC or to any other medium, which enables forwarding the data to DAC. Such device can be either a television set (TV) or a terminal (POS) or a mobile telephone set (GSM) or also a global computer network (INTERNET) or similar.
The term "identification" means an action, by means of which the user permits the data exchange and simultaneously identifies himself in such a manner, that it can be unambiguously established, who has in fact performed the transaction, i.e. who has been involved in it.
Identification can be performed by means of an "identification device", which is a smart card, magnet card, bar code card or any other similar medium. The identification device can be designed as a remote functioning and/or remote control device or medium, such as a GSM or an infrared remote controller (IR) or similar.
The user may allow the data exchange through the "identification code", which can be the so-called PIN-code, fingerprint or any other possible form of biometric identification, and similar.
The term "database" means any collection of data or an information related to certain transaction(s) or also any collection of data or an information related to transaction(s) together with at least a minimum quantity of information required for enabling an unambiguous identification of the person, who performed the transaction or who was involved in it. The database can also mean a collection of personal data related to the user. The data concerning the collected bonus points are also included within the data bases.

The database can be located:
- entirely in DAC, or
- at least temporary in the transaction provider device, if e.g. the on-line connection with DAC can not be maintained permanently, from which the data can be then transferred to DAC from time to time upon establishing appropriate on-line connection, or
- partially in DAC and partially in the transaction provider device, or also
- in any other memorizing medium being capable for transferring the data into DAC (e.g. on a smart card, from which the data are then by means of an electronic reader transferred to DAC).

The indications of the databases for the purpose of this invention are the following:
- A': is a transaction database which is available within the transaction provider device and which is a data collection comprising exclusively data related to the performed transactions excluding any data related to the person who has been involved to this transaction and by whom the transaction has been enabled on the basis of appropriate approval;
- B': is a personal identification database, i.e. the database comprising data related to the person, who enabled, by his approval, the combining of the data related to the transaction with personal data related to himself, or which contains at least so many data on this person that an unambiguous identification is possible; this database is located either on the VDECA-card or any other (optionally also remote functioning or remote controlled) identification device or medium;
- A: is the transaction-personal database available on the central computer (DAC server) and comprising at the one hand the data related to the performed transactions and on the other hand also the data related to the person, by whom the combining of transaction data with personal data has been enabled on the basis of appropriate approval, or may also be a database which comprises at least a minimum quantity of personal data which is necessary for unambiguous identification of this person;
- B: is a personal database available on the VDECA-card and/or in a central computer (DAC), i.e. a database, containing the data related to the person, who, by his approval, enabled the combining of the data on the transaction with the personal data;
- C: is the bonus database, containing the data on acquired points (loyalty) and is available in the VDECA-card and/or in the central computer (DAC).

Hereinafter, the system, i.e. the device for enabling the said collecting of the data and exchange thereof for the above mentioned bonus points, is called "the VDECA-system". For the purposes of this patent application, the entire scheme of the data exchange for bonus points is called " the VDECA-scheme".

The smart card, which, in the sense of this application, can be used as a temporary storage medium for databases, and which can be also used for recording or writing the bonus points thereon, and which may further be used as an identification device, is called "the VDECA card" for the purposes of this application.

The Figures appended for better understanding and illustrative presentation of the invention, relate to the following:
- Fig.1 presents the device, which enables voluntary data exchange for bonus points. It presents the individual assemblies of the device, the data exchanging and the direction of the data transfer.
- Fig.2 presents other alternatives of the device enabling voluntary data exchange or the performance of the data exchange procedure according to the invention.
- Fig.3 schematically presents a VDECA-card as a part of the device according to Fig.2 for enabling voluntary exchange of the data which are written or may be written onto the card.
- Fig. 4 presents the sequence of steps in the performance of process of writing the data, i.e. the transaction data, onto the VDECA card, and
- Fig. 5 presents the sequence of steps during performance of a special embodiment of the process of voluntary exchange of the data available on the card, namely, during performance of voluntary exchange of the data related to transactions as performed by means of the card, for the so-called loyalty points (loyalty to a merchant or some other institution).

All examples and explanations dealt with in the continuation, are based on the assumption that (e.g. for the reason of the legislation in the field of personal data protection) the use of personal data and other data related to the user for any other purpose, except the one, for which the data have been disclosed, is not allowed or illegal or irregular in the technical sense. Besides, care must be taken that the user's identity always remains undisclosed. Thus for example, a trading company, which requires certain data from its customer, when he is included into its bonus scheme, must not use his personal data for anything else except for the issuing of the card and sending of notifications and other activities in the framework of the bonus scheme. The data obtained in this way must not be used for any analysis of the shopping activities of a user or a certain group of users without their approval. A similar example is the so-called health card, in which the data on the user's health condition, purchases of medicaments, visits with doctors etc. are recorded.

A usual problem in collecting data on activities or habits of people is that the groups captured are numerically limited, e.g. in telephone polls or other kinds of surveys, and besides, the majority of people are not interested in participation in such polls. In addition to the difficulties connected with this kind of data collection and its high costs, the data at disposal for analyses, do not reflect the actual present condition, for they are always a little obsolete - the so-called on-line data collection is not possible in this way. The invention relates to voluntary exchange of data on transactions and the personal data of a user, involved in these transactions, for the purpose of obtaining bonus points, in which the invention refers to the device enabling the performance or performing of the data exchange.

The Device according this invention is characterized in that the central computer (DAC) includes at least a transaction-personal database (A), which contains data related to performed transactions in combination with the data related to the person, who performed the transaction and approved combining of the transaction data with the personal data, namely at least so much data related to this person, that unambiguous identification of the person is possible,
and that
the transaction provider device includes at least a transaction database (A'), which contains only the data related to performed transactions, without any data related to a person, who performed the transaction and who approved combining transaction data with the personal data,
and that
the identification device comprises at least a personal identification database (B'), which contains data related to a person, who performed the transaction and who approves the combining of the transaction data with the personal data, namely at least so much data related to this person, that unambiguous identification of this person is possible,
by which
at the same time at least one bonus database (C) containing the data on acquired bonus points is available either on the central computer (DAC) or on the identification device,
and moreover, that a database (B) is available either on the central computer (DAC) or also on the identification device, which database (B) contains complete data related to the person, who performed the transaction and who, by his approval, enabled the combining of the data on the transaction with the personal data,
and by which
the said central computer (DAC), identification device and the transaction provider, and the said databases (A, B, C and A', B') are arranged in such mutual interconnection that any combining of the data from the transaction database (A') and personal database (B) or from the transaction database (A') and personal identification database (B') is possible only on the basis of obtaining adequate identification and simultaneously by generating the bonus points and writing them into the bonus database (C).
In the said central computer (DAC) at least a database (A) is available, i.e. the transaction-personal database, which includes relevant data related to performed transactions in combination with the data related to the person, who performed the transaction, i.e. who enabled the combining of the transaction data with the personal data by his approval, i.e. it includes at least so many data on this person that unambiguous identification of this person is possible.

The said transaction provider device comprises a transaction database (A'), i.e. the database containing exclusively the data related performed transactions excluding any data related to the person, who performed the transaction, i.e. who enabled the combining of the transaction data with the personal data by his approval.

The said identification device or medium comprises a personal database (B'), which includes the data related to the person, who performed the transaction, i.e. who enabled the combining of the transaction data with the personal data by his consent, i.e. it contains at least so many data on this person that his unambiguous identification is possible.

Further, it is possible that, besides the mentioned personal-transaction database (A), the central computer (DAC) comprises also the personal database (B), which contains the data relating to the person, who performed the transaction, i.e. who enabled the combining of the transaction data with the personal data by his approval, by which moreover in the identification device a personal database (B') is available, which comprises at least so many data related to the person enabled the combining of the transaction data with the personal data on or after the performance of the transaction, that unambiguous identification of this person is possible, and by which combining i.e. the associating of the data from the transaction database (A') and the personal database (B) is possible exclusively on the basis of obtaining appropriate identification data from the personal identification database (B') being as said before available in the identification device.

According to the invention, it is further envisaged that the central computer (DAC) comprises, besides the said personal-transaction database (A) and personal database (B), also the bonus database (C), into which the data are written exclusively upon combining or associating the data from the transaction database (A') of the transaction provider device with the data from the personal database (B) on the basis of relevant identification data from the personal identification database (B') in the identification device within the personal-transaction database (A) on the central computer (DAC).

According to the invention, a further possibility is foreseen by which, for example, the smart card comprises also the bonus database (C), into which the data are written exclusively upon combining or associating the data from the transaction database (A') as available in the transaction provider device with the data being available in the personal database (B), which is possible exclusively on the basis of relevant identification data available in the personal identification database (B') of the identification device, into the personal-transaction data base (A) available in the central computer (DAC).

According to the invention, an alternative possibility of embodiment of the device is also foreseen, by which the bonus database (C) is located both on an identification medium, especially on the VDECA-card, and simultaneously also in the central computer (DAC).

A combined embodiment of the device according to the invention is also possible, in which at least a part of the data from the bonus database (C) is located in the central computer (DAC), and another part on the identification medium, especially in the smart card or the VDECA-card, while the data are written into the database (C) upon combining the data from the transaction database (A') and the personal database (B) on the basis of the data from the transaction database (A') and identification data from the personal identification database (B') of the identification device.

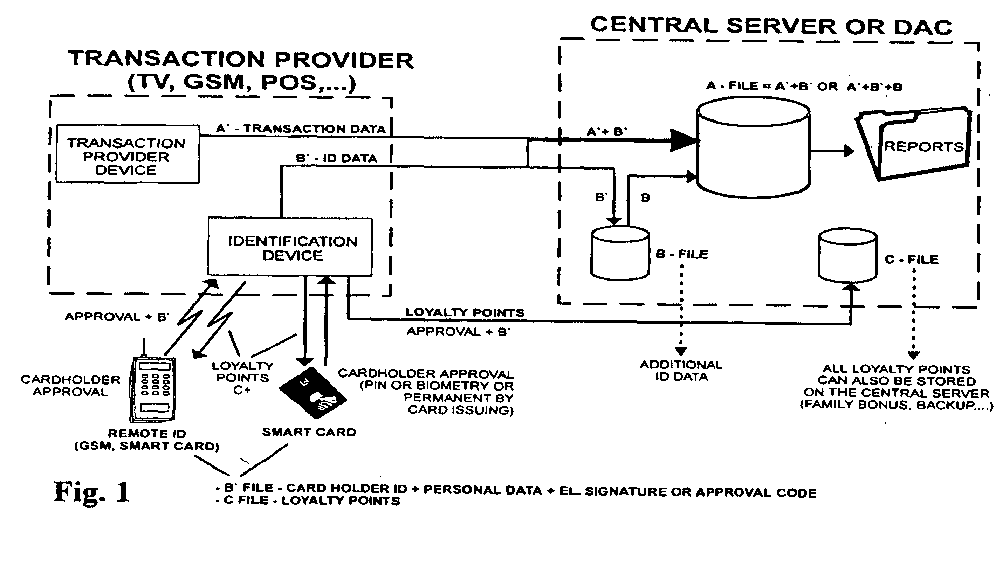

In Fig.1 a basic course of the voluntary data exchange process is schematically shown. The process of voluntary exchange of data for bonus points according to the invention, is characterized in that whenever transactions are performed by the user, who allowed that his personal data may be used in combination with the data related to transaction under simultaneously exchange for bonus points, at the one hand the transaction database (A') is created on the basis of the said data related to the performed transactions, and on the other hand, at least the personal identification database (B') and if necessary also the personal database (B) is created on the basis of the personal data related to the user. After that the personal-transaction data-base (A) is created on the basis of data obtained from the transaction database (A') on the basis of the approval, previously obtained from the user, namely on the basis of correct data obtained from the identification database (B'). Simultaneously with the said personal-transaction database (A), the bonus database (C) is also created by means of data related to bonuses, which belong to the user in exchange for his approval on use of his personal data. Accordingly, the said transaction database (A') comprises exclusively the data related to the performed transactions without any data related to the user, who performed the transaction, or who enabled the combining of the transaction data with the personal data by his approval. The said identification personal database (B') comprises at least the data, which are necessary for the identification of the person, who enabled the combining of the transaction data with the personal data, respectively comprises at least so many data on this person that unambiguous identification of the person is possible. Furthermore, the transaction-personal database (A) comprises data related to performed transactions and at same time also the data related to the person, who performed the transaction, i.e. who enabled combining the transaction data with the personal data by his approval, namely at least so many data with respect to this person, that unambiguous identification of this person is possible. The personal database (B) comprises complete relevant data related to the person, who enabled combining the transaction data with the personal data by his approval. The bonus database (C) comprises data on compensations, e.g. the bonus points, which belong to the said person, i.e. the user, in exchange for the personal data given at disposal.

The application includes also a special example of a device enabling the voluntary exchange of the data for bonus points available on card, which can be written onto the same card. In this case the device includes a smart card, readable and writable by means of a read-write unit, connected with the central computer or the data analysis centre; at least three groups or fields of data are foreseen in the card, namely the transaction database field, the personal database field, which contains the data related to the cardholder, and the bonus database field; the data exchange is foreseen at least between two groups of data, namely between the data belonging to the transaction database data respectively the data belonging to the personal database, and the data belonging to at least one data group of the bonus database of the last mentioned field.

Accordingly, the exchange of data belonging to at least one transaction data group, base or field and the card and to at least one cardholder or personal data group of the field in the card for the data which belong to at least one bonus data group, base or field in the card, can be performed by means of a read-write unit in such a manner that by reading at least certain data from the transaction database and the personal database, writing of appropriate data into at least one bonus database on the card is simultaneously performed.

Further, it is characteristic for the discussed alternative of the device according to the invention, that the data in each transaction data group on the card, the supplementing or updating of which, with the exception of erasing or deleting, is impossible, are protected and accessible only to the cardholder. Simultaneously, the data in each personal cardholder data group or base in the card are also generally protected and accessible only to the cardholder, in which their supplementing, adding or updating is enabled only on the basis of the approval or confirmation by the cardholder as well as by means of the read-write unit via the data analysis centre. On the other hand, the data in each bonus database or group of the field on the card can be written by means of the read-write unit on the basis of reading-off or obtaining the data from the transaction database and personal database on the card at disposal. In general, by the observed embodiment the data available in the transaction database and in the personal database on the card are readable only on the basis of reciprocal writing, i.e. entering the data into appropriate bonus database on the card by means of the said read-write unit.

According to the invention, an alternative process is also foreseen, which enables voluntary exchange of the data stored on the card, for electronic points, which can be written onto the same card. This alternative process includes at least one step of data exchange, namely reading of at least certain data from at least two data groups available on the card, i.e. from the transaction database and from the personal database, and simultaneously writing or entering appropriate data, especially electronic points, into at least one bonus database being also available on the same card. In performing this:
- in the first step the card is inserted into the read-write unit, which is connected to the central computer (i.e. to DAC - data analysis centre);
- in the second step verification is made, if the data on performed transactions are already available in the transaction database,
- in the third step appropriate data is issued or printed or otherwise presented on the basis of verification as mentioned in the previous step, which data is then written into the bonus database.
- in the further step appropriate verification, authorisation or approval by the cardholder is required, who therefore has to approve exchange of data or has to issue an approval with respect to use of data available in the transaction database in combination with the personal data;
- in the next step reading the data from the transaction database and personal database on the card is executed on the basis of the approval of the cardholder as mentioned in previous step, however exclusively under condition, that at the same time appropriate data are written into the bonus database in the card.

Now the invention will be described in more detail on the basis of several examples respectively embodiments and moreover also in connection with the enclosed drawings.

### Example 1

This example illustrates operating of the device for enabling voluntary exchange of data for electronic points, as well as the possibility of use thereof during purchasing, e.g. by purchase of goods in a shop, purchase of meals or beverages in restaurants or in payments of tourist services in tourist agencies. In this case the user, involved in the VDECA system, makes certain purchase and payment by means of his card (a smart card), by which the data related to this purchase or transaction are collected in the transaction database A' being located in this case in the cash register or the terminal (POS), which is nowadays a frequent practice, so that such process may generally be performed without any problems quite in accordance with the rules or the legislation and without any approval of the user or a person, which made the purchase. The data related to this transaction are transferred from the said transaction device either permanently or at least periodically into the central computer (DAC), and whenever appropriate or necessary also to the VDECA-card (a smart card or a magnet card), or might also be firstly transferred onto the card and subsequently forwarded from the card to the central computer.

Sellers, and especially manufacturers of goods, or certain services, are often interested in obtaining more information about consumers who buy certain goods or use certain services and in which conditions (age groups, profession, status or when and how much, etc.). For this purpose they certainly need the data related to persons who purchase. Such person or user can allow the use of his personal data for such a purpose, either on the basis of a prior agreement (contract) or before the performance of each transaction, i.e. each separate time. The database B', which contains the user's or buyer's personal data at least for the identification, is available either on the card or is memorized by means of any other medium, and the access to these data is possible only on the basis of the approval of the cardholder, when he activates the card or enables access to his personal data, which can be entirely stored also in a separate personal data base B in the central computer DAC, by means of a PIN-code, biometric identification or in whatever other previously mentioned manner. When the user issues a permanent permit for the use of the personal database B, including his personal data, to a certain merchant or some other VDECA-system owner, the combining or associating of the data from the transaction database A' and the identification personal database B', or personal database B, occurs in each transaction (purchase). Since certain benefits (e.g. bonus points, which mean a discount or money) are ensured to the user as a compensation for allowed access to his personal data available in the database B', the device for enabling such voluntary exchange of data for electronic points according to the invention is created in such a way, that writing of the data into the bonus database C occurs simultaneously with the combining or associating of the data from the databases A' and B' or B.

### Example 2

This example illustrates functioning of the device for enabling voluntary exchange of data for electronic points in accounting of telephone services. The origin of the data or information, i.e. the transaction provider device in this case is either the so-called SIM-card or simply a VDECA-card, and the data can be captured also in the telephone exchange or in a telephone operating centre, where the information on calls are recorded (e.g. the duration of a telephone conversation, time of a call, destination of a call and similar). The central computer (DAC) is at disposal also in this case, and the SIM-card, for example, with the included identification device, serves as a transaction device in the case of mobile telephony, while in the case of stationary telephony a VDECA-card reader can be incorporated into the telephone line. The user approves the use of his personal data from the personal database (B) either by issuing a permanent approval on the occasion of concluding a subscriber contract or only for certain calls, in which he identifies himself, for example, prior to the beginning of the call (database B'), or he approves the use of his personal data by entering, for example, his PIN-code or by means of some other identification. The data related to certain phone call can be then transferred into the central computer (DAC) either simultaneously or periodically, for example via appropriate card reader or via computer network (INTERNET).
In this case the personal-transaction database (A) consists of combined data, i.e. of the data related to the transactions which may be obtained from the transaction database (A'), and the personal data related to the user which may be obtained from the database (B' and/or B), and which are accessible on the basis of the user's identification or (permanent or individual) approval either only in the central computer (DAC) or only on the VDECA-card, or partially in the central computer (DAC) and partially on the card. The data related to bonus points (loyalty points) are written into the bonus database (C) simultaneously with combining, i.e. associating the said data from the transaction database (A') and from the personal database (B, B'), by which the bonus database (C) is located either only in the central computer (DAC) or only on the VDECA-card or smart card, or even on the both above mentioned locations, i.e. in the central computer (DAC) and at the same time also on the VDECA- card.

### Example 3

This example illustrates functioning of the device for enabling voluntary exchange of data for electronic points in the case of access to certain internet sites respectively visiting thereof. In this case the transaction provider device may be a personal computer available to the user and connected to the computer network (INTERNET), or a computer of a higher capacity (server), by means of which connection of the user's computer with the global network is performed. The card reader or a mobile telephone (GSM), or similar, can be used as the identification device, by means of which the user's authorisation is possible by entering an adequate PIN-code. Again, the data related to transactions, namely to visiting internet sites, which belong to the transaction database (A'), are transferred either permanently or periodically to the central computer (DAC) creating thereby the personal-transaction database (A) on the basis of the user's identification or authorisation by means of the identification device in combination with the data from the personal database (B', B), which are available either in the central computer (DAC) or in the VDECA-card, while simultaneously the data on obtained bonus points are written in the bonus database (C).

### Example 4

This example illustrates functioning of the device for enabling voluntary exchange of data for electronic points during watching television programmes. The transaction provider device in this case is a television set (TV), and the transaction database (A') comprises the data related to information about time and duration of watching certain television programmes by the user, about changing the channels, and similar. For this purpose the television set needs to be put in connection with the identification device, which can be the VDECA-card reader, however, remote identification or remote authorisation is also possible by means of a mobile telephone set (GSM) or some other similar device. Transfer of the data to the central computer (DAC) is performed permanently or periodically in a manner, which may be essentially the same as in the previously described examples; moreover, combining or associating the data from the databases A' and B' or B into the personal-transaction data (A) may also be performed in the same way as in the previous examples, while the data are simultaneously written into the bonus database (C) in the central computer (DAC) or/and on the VDECA-card.

### Example 5

This example illustrates functioning of the device for enabling voluntary exchange of data for electronic points in accounting the costs of various services, which a guest is offered in a hotel. For this purpose the hotel or a hotel chain has a central computer (DAC), and the guest, at his arrival in the hotel obtains a card (i.e. the VDECA-card, e.g. a magnet or a smart card). During the time of his stay in the hotel, the guest "pays" the services (drinks, entrance fees, recreation) with the said card and the data on the performed transactions are collected in the transaction database (A'). If the guest, at his arrival in the hotel, approves the use of his personal data together with the data related to the transactions, which he performs by means of the card (VDECA), on the basis of his permanent approval or his identifications and authorisations, given separately (e.g. on the basis of the input of his PIN-code) before performing particular transactions or before ordering certain services - the personal-transaction database (A) can be created in this way, and simultaneously also the bonus database (C), in which the bonus points are collected, on the basis of which the hotel recognises the guest (the VDECA-card user) a certain discount on the occasion of the accounting of the services performed for him.

### Example 6

Fig. 1 - 5 present a special and quite concrete example of the embodiment of the device according to the invention, in which it is envisaged, that at least the personal database B and the bonus database C are located in the VDECA-card 1.

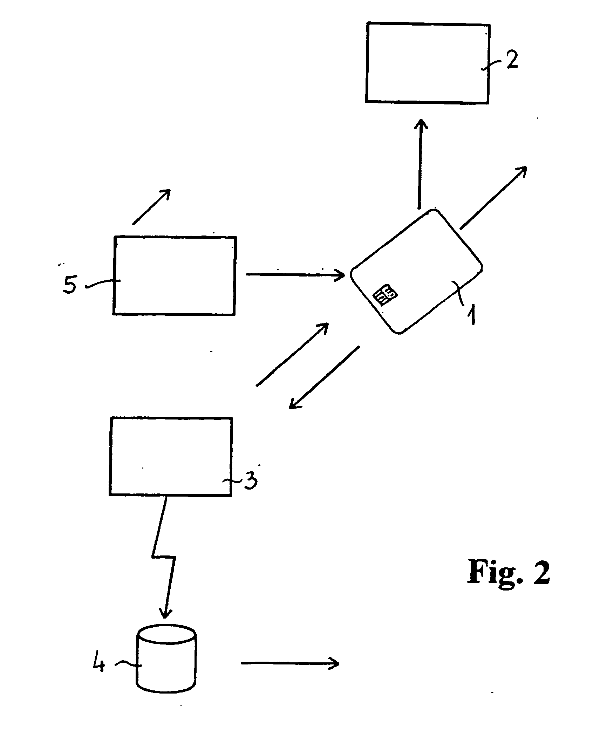

As shown in the Fig. 2, the device for enabling voluntary exchange of data comprises of a VDECA-card 1, which can be inserted into the terminal 2, and further also a read-write unit 3, a central computer or the DAC-centre 4 for data processing and a data collecting unit 5, which represents, in general, the previously mentioned transaction provider device.

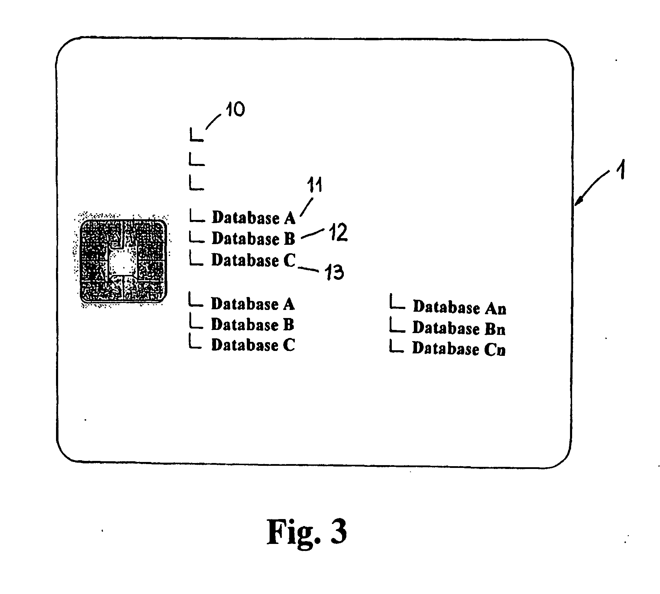

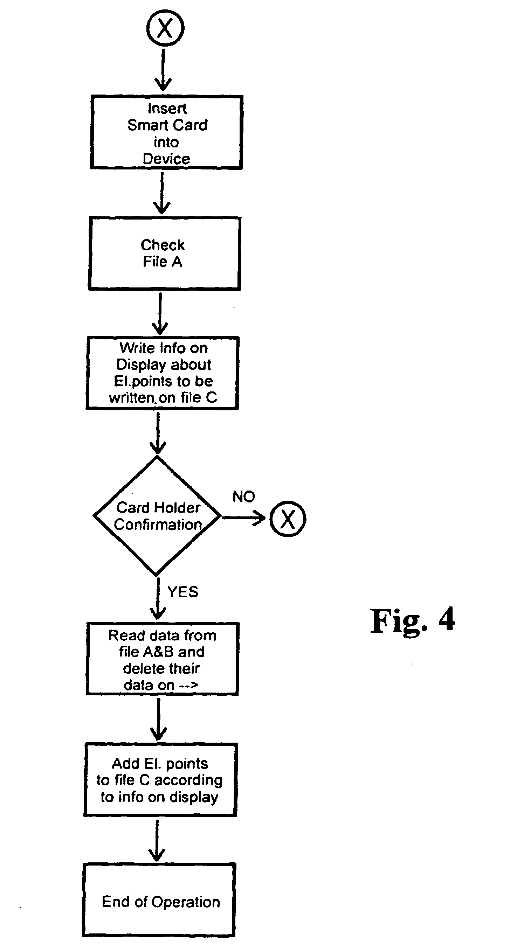

The data collecting unit 5 may be arranged e.g. either in a shop (when the exchange of data on purchases are in question), or within the remote controller of a television set (when the exchange of data on watching television programmes is in question), or in a drugstore (when the exchange of data on prescribed and given pharmaceutical products is in question).
The central computer 4, i.e. the centre for data processing and analysing (DAC), may be an appropriate assembly or a data processing device of any appropriate kind, which may offer any desired information to the person obtaining the data from the card 1.
The read-write unit 3 may be either a personal computer, which can be connected to the global network (INTERNET), or an information terminal or a similar device, which enables writing the data onto the card 1, and/or also reading the data, including the identification data, from the said card 1.
It is meant here that the person who obtains the data, e.g. a merchant who is interested in the data exchange with the holder of the card 1, should ensure a sufficient quantity of terminals 2 arranged in appropriate locations.
The VDECA-card 1 is separately but quite schematically shown in Fig. 3. In the discussed case this is the card 1, by means of which, in combination with the previously mentioned devices 2, 3, 4, 5 for writing, reading, analysing and similar operations, the idea, mentioned in the introduction, can be realised. The card I, besides the field 10 for storing various data, available also on similar cards (e.g. on those for the needs of health insurance or electronic wallets or similar), contains also at least three fields, i.e. 11, 12, 13 with data groups, databases or data files, namely:
- a field 11 comprising the transaction database (A);
- a field 12 comprising the database (B) consisting of the data related to the cardholder, and
- a field 13 comprising the bonus database (C), which by the preferable embodiment includes the statement of acquired electronic points.
Accordingly, it is of major importance that the data exchange, the course of which is indicated in Fig. 1 by means of arrows, is performed in such a way, that writing the data into the field 13, i.e. in the bonus database (C), is performed as soon as the data may be read from the fields 11 and 12 or from the transaction database (A) and personal database (B).
By this embodiment of the device according to the invention, the field 11 or the transaction database (A) comprises all the necessary data in connection with the transactions performed by means of the card 1, and the data related to transactions are written thereto in compliance with the purpose of the card 1. Access to these data is disabled and is possible exclusively on the basis of the approval of the holder of the card 1. Data protection can be carried out either by means of an authorised code (e.g. PIN 1), biometrically or in some other manner being commonly known in the art. The data available in the field 11 can be deleted e.g. by the holder of the card 1 by means of another code (PIN 2), but cannot be updated or upgraded or similar. It is especially preferable, if the data in the field 11 are automatically erased immediately after reading thereof by means of the read-write unit 3 and transferring thereof to the DAC-centre 4.
The next field 12 in the card 1, i.e. the field 12, which comprises the data related to the owner or the personal database (B), contains those data related to the holder/owner of the card 1, which are necessary for each individual purpose. The data shall be written into this field 12 comprising the said database (B) in compliance with the purpose of the use of the card 1. The data are protected (e.g. again with a PIN-code or biometrically or in some other manner) and the access to them is possible only on the basis of the approval of the holder of the card 1, namely, if or when the cardholder approves the data exchange. In general, the holder of the card 1 can also allow the access only to certain part of the data available in this field 12 or in the belonging personal database (B), especially, for example, if he wants to remain anonymous, or similar, in polls on purchased products or consumed medicaments. The data from the field 12 or from the personal database (B), can be replaced or corrected, updated or upgraded, but only on the basis of the knowledge, approval or authorisation obtained from both sides, namely from the holder of the card 1, i.e. of the data stored in the field 12, as well as from the DAC-centre 4 or the authorised user of the data, stored in the field 12.
The field 13 in the card 1 comprises the data which belong to the so-called bonus database (C). This especially means the data related to compensation for allowing data exchange or giving the data at disposal, which can be expressed either in money value or in other bonus forms, e.g. electronic points, which can be realized by any subsequently purchase of goods or services. In common, the data may be written into the bonus database (C) or in the field 13, as soon as reading the data from the transaction database (A) and personal database (B), namely from the fields 11 and 12, has been performed.
In the case, when the data on prescribed medicaments are given at disposal in exchange for bonus points, the field 11 may comprise the transaction database (A) consisting of data related to issued prescriptions for medicaments, which are prescribed in electronic form by a doctor to the user of medical services. Thus all the necessary data from individual prescriptions are written into the transaction database (A), i.e. in the field 11 on the card 1.
In the practical example as of previous paragraph, the personal database (B) in the field 12 in the card 1 can consist of personal data, such as age, sex, nationality or other data, which are required in compliance with the purpose of the use of the card 1.
According to the embodiment as described in the both previous paragraphs, the bonus database (C) available in the field 13 on the card 1 comprises electronic points, which may also be evaluated in money, and which are payable in any appropriate manner. The points in exchange for the personal data given at disposal, can be awarded to the holder of the card 1, for example, by a pharmaceutical company, which needs the data for the purposes of marketing research, developing medicaments and similar. In general, the data available in the field 13 or in the bonus data group or in the database (C) can be also the points given for loyalty to permanent customers, or points for providing data on watching TV-programmes and similar data, which means an appropriate stimulation for the holder of the card 1 for giving at least some of his personal data at disposal to third persons, i.e. the personal data, which are, in general, inaccessible for third persons.
As evident from Fig. 4, a process of enabling the data exchange is performed in the following steps:
- In the first step the card 1 according to Fig. 3 is inserted into the read-write unit 3, which is connected to the central computer or the DAC-centre 4 (this can be either the so-called EFTPOSD terminal, personal computer connected to the internet, GSM-telephone set and similar);
- In the second step the verification is executed, if the data in performed transactions are already available in the field 11 (transaction database (A)).
- In the third step a data occurs on a display (not shown in the figure) or is issued or listed or put out in some other appropriate mode on the basis of verification as described in the previous step, which data is then written into the field 13, i.e. into the bonus database (C), e.g. an amount or quantity of electronic points obtained as compensation for the use of the data from the field 11 an/or 12, or from the transaction database (A) and/or personal data base (B);
- In the next step, verification by the holder of the card 1 is performed either by entering the PIN-code or by approval the exchange or combining the data in some other appropriate mode, i.e. by issuing approval for the use of the data from the field 11 or the database (A) in combination with the data from the field 12 or the data from the personal database (B);
- In the next step, reading of the data from the transaction data base (A) and/or personal-transaction base (B) is performed, i.e. from the fields 11 and/or 12 in the card 1, however, simultaneously with recording adequate data into the field 13 or into the bonus database (C) in the card (1), and then
- the transaction is finished, by which the data, obtained in the bonus database (C) of the field 13 in the card 1, can be used in any appropriate manner, e.g. as points for awarding loyalty or as a form of an electronic wallet, and similar.

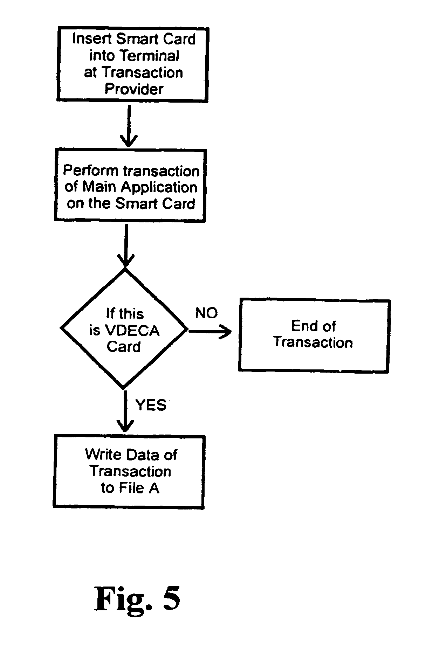

In Fig. 5 the sequence of the steps is schematically shown, relating to the performance of the preferable alternative of the process of enabling voluntary exchange of the data available on the card, namely the performance of the voluntary exchange of the data on transactions, performed by the card 1, for the so-called loyalty points (loyalty to a merchant or some other institution). In this case, the first step requires the insertion of the card 1 into an adequate terminal, i.e. into the reading-recording unit 3, and then the main transaction is performed (e.g. the accounting of the value of the purchased goods and similar). When the so-called VDECA-card 1 is in question, which enables the data exchange according to the invention, adequate data, envisaged for later exchange by means of the above described device according to the invention and in compliance with the above explained data exchange procedure according to the invention, are written into the field 11 or into the transaction database (A) available on the card 1.

In the continuation some other quite practical and illustrative examples will be presented, the purpose of which is to show above all the reason and meaning of the formation or existence of the personal-transaction databases (A) in various economy branches, namely:
i) Manufacturers (e.g. of non-alcoholic beverages) often plane and perform various promotion actions, in which at least one destination group is determined in advance (e.g. with regard to age, purchasing potential and similar), towards which the action would be especially directed. The analysis of the obtained personal-transaction database (A) can show everything concerning the scope, within which a certain action achieved its envisaged purpose or it shows other indicators (structure of customers, age, purchasing potential, and similar), on the basis of which such actions can be planned and performed with the highest possible efficiency in the future.
ii) From the database (A), a trading firm can establish the structure of customers together with their habits, behaviour and response of individual groups of customers, which it can compare, on one side, with the structure of customers within the branch or with competitive firms, and in this way it can make indirect decisions on its position in the market. On the other hand, the trading firm who knows the habits of its customers, can process and animate them much more efficiently and systematically.
iii) In the case of mobile telephony the analysis of the database (A) means essentially more information on subscribers and their actual wishes and needs concerning telephoning. The subscribers and the users of services can be offered the desired packages of services, and in this way the number of satisfied subscribers or customers on the whole can be increased.
iv) In the field of the consumption of pharmaceutical products, the analysis of the personal-transaction database (A) enables finding out, to whom (age, sex, social status) and to what extent or in which regions certain medicaments were prescribed. Indirectly, it is possible to seek reasons for the status found out or to envisage measures, which would lead to certain changes.
v) In the case of a rather analogue problem concerning watching television programmes or visiting certain internet sides, the database (A) analysis makes possible to see the structure of users and the period of paying certain attention by a certain segment of users. On this basis, it is possible to determine optimum time periods for distributing various advertisements and similar.

## Claims

1. Device for enabling voluntary exchange of data for bonus points, including electronic points, comprising at least one central computer (DAC), at least one transaction provider device, and at least one identification device, wherein the central computer (DAC) includes at least a transaction-personal database (A), which contains data related to performed transactions in combination with the data related to the person, who performed the transaction and approved combining of the transaction data with the personal data, namely at least so much data related to this person, that unambiguous identification of the person is possible,
the transaction provider device includes at least a transaction database (A'), which contains only the data related to performed transactions, without any data related to a person, who performed the transaction and who approved combining transaction data with the personal data,
the identification device comprises at least a personal identification database (B'), which contains data related to a person, who performed the transaction and who approves the combining of the transaction data with the personal data, namely at least so much data related to this person, that unambiguous identification of this person is possible,
by which
at the same time at least one bonus database (C) containing the data on acquired bonus points is available either on the central computer (DAC) or on the identification device,
and moreover, that a database (B) is available either on the central computer (DAC) or also on the identification device, which database (B) contains complete data related to the person, who performed the transaction and who, by his approval, enabled the combining of the data on the transaction with the personal data,
and by which
the said central computer (DAC), identification device and the transaction
provider, and the said databases (A, B, C and A', B') are arranged in such mutual interconnection that any combining of the data from the transaction database (A') and personal database (B) or from the transaction database (A') and personal identification database (B') is possible only on the basis of obtaining adequate identification and simultaneously by generating the bonus points and writing them into the bonus database (C).

2. Device according to Claim 1, **characterized in that**
the said central computer (DAC), identification device and the transaction provider, and the said databases (A, B, C and A', B') are arranged in such mutual interconnection that any combining of the data from the transaction database (A') and personal database (B) or from the transaction database (A') and personal identification database (B') is possible on the basis of single approval and submitting the identification data each time before combining of the data obtained from the said databases (A' and B or A' and B'), and at the same time by generating the bonus points and writing them into the bonus database (C).

3. Device according to Claim 1, **characterized in that** the
the said central computer (DAC), identification device and the transaction provider, and the said databases (A, B, C and A', B') are arranged in such mutual interconnection that any combining of the data from the transaction database (A') and personal database (B) or from the transaction database (A') and personal identification database (B') is possible on the basis of obtaining both, the approval and identification data before each combining of the data obtained from the said databases (A' and B' or A' and B), and at the same time by generating the bonus points and writing them into the bonus database (C).

4. Device according to any of the previous Claims 1 to 3, **characterized by** that that the identification device comprises a personal identification database (B'),
a personal database (B),
a transaction database (A'),
a bonus database (C), and
a personal-transaction database (A) located in the central computer (DAC).

5. Device according to any of Claims 1 to 4, **characterized in that** the bonus database (C) is arranged on the central computer (DAC).

6. Device according to any of Claims 1 to 4, **characterized in that** the bonus database (C) is arranged on the identification device.

7. Device according to any of Claims 1 to 4, **characterized in that** the bonus database (C) is arranged both on the identification device and on the central computer (DAC).

8. Device according to any of Claims 1 to 4, **characterized in that** the personal database (B) is arranged on the central computer (DAC).

9. Device according to any of Claims 1 to 4, **characterized in that** the personal database (B) is arranged on the identification device.

10. Device according to any of Claims 1 to 4, **characterized in that** the personal database (B) is arranged both on the identification device and on the central computer (DAC).

11. Device according to any previous Claim, **characterized in that** the transaction provider device is functionally linked to at least one identification device.

12. Device according to Claim 11, **characterized in that** the transaction provider device, which is functionally linked to at least one identification device, is a television set (TV).

13. Device according to Claim 11, **characterized in that** the transaction provider device, which is functionally linked to at least one identification device, is a POS-terminal.

14. Device according to Claim 11, **characterized in that** the transaction provider device, which is functionally linked to at least one identification device, is a mobile phone.

15. Device according to Claim 11, **characterized in that** the transaction provider device, which is functionally linked to at least one identification device, is a global computer network (INTERNET).

16. Device according to Claims 11 to 15, **characterized in that** the identification device is a smart card.

17. Device according to Claims 11 to 16, **characterized in that** the identification device is a magnetic card.

18. Device according to Claims 11 to 15, **characterized in that** the identification device is a bar code label card.

19. Device according to Claims 11 to 15, **characterized in that** the identification device is a biometric identification device.

20. Device according to any of Claims 11 to 19, **characterized in that** the identification device is a remote operating device, namely an over long distances operating identification device.

21. Device according to Claim 20, **characterized in that** the identification device is a mobile telephone (GSM).

22. Device according to Claim 20, **characterized in that** the identification device is a infrared remote-controlled device.

23. Device according to Claims 16 to 22, **characterized in that** the identification device is operating by means of using a PIN-code.

24. Device according to any of Claims 1 to 4, **characterized in that** the personal-transaction database (A) is arranged both on the identification device and on the central computer (DAC).

25. Device according to any of Claims 1 to 4, **characterized in that** the transaction database (A') is arranged both on the identification device and on the transaction provider device.

26. Device according to any of Claims 1 to 4, **characterized in that**, the transaction database (A'), the personal identification database (B') and the bonus database (C) are arranged on the identification device.

27. Device according to any of Claims 1 to 4, **characterized in that** the personal-transaction database (A), the personal database (B) and the bonus database (C) are arranged on the identification device.

28. Device according to Claims 26 and 27, **characterized in that** the identification device is a smart card.

## Patentansprüche

1. Gerät zum Ermöglichen des freiwilligen Austausches von Daten für Bonuspunkte, inklusive elektronische Punkte, mit mindestens einem zentralen Rechner (DAC), mindestens einem Transaktions-Providergerät, und mindestens einem Identifikationsgerät, wobei der zentrale Rechner (DAC) mindestens eine Transaktions-Personen-Datenbank (A) umfasst, die Daten enthält, die sich auf ausgeführte Transaktionen beziehen, in Verbindung mit Daten, die sich auf die Person beziehen, die die Transaktion ausgeführt hat und die das Kombinieren von den Transaktionsdaten mit den persönlichen Daten genehmigt hat, und zwar mindestens so viele Daten, die sich auf diese Person beziehen, dass eine eindeutige Identifikation von der Person möglich ist,
das Transaktions-Providergerät mindestens eine Transaktions-Datenbank (A') umfasst, die nur die Daten enthält, die sich auf ausgeführten Transaktionen beziehen, ohne irgendwelche Daten, die sich auf eine Person beziehen, die die Transaktion ausgeführt hat und die das Kombinieren der Transaktionsdaten mit den persönlichen Daten genehmigt hat,
das Identifikationsgerät mindestens eine Personen-Identifikations-Datenbank (B') umfasst, die Daten umfasst, die sich auf eine Person beziehen, die die Transaktion ausgeführt hat und die das Kombinieren von den Transaktionsdaten mit den persönlichen Daten genehmigt hat, und zwar mindestens so viele Daten, die sich auf diese Person beziehen, dass eine eindeutige Identifikation von der Person möglich ist,
durch das
gleichzeitig mindestens eine Bonus-Datenbank (C) mit den Daten über erworbene Bonuspunkte entweder auf dem zentralen Rechner (DAC), oder auf dem Identifikationsgerät verfügbar ist,
und ferner, dass eine Datenbank (B) entweder auf dem zentralen Rechner (DAC) oder auch auf dem Identifikationsgerät verfügbar ist, wobei die Datenbank (B) die kompletten Daten enthält, die sich auf die Person beziehen, die die Transaktion ausgeführt hat und die durch ihr Genehmigen das Kombinieren von den Daten über die Transaktion mit den persönlichen Daten ermöglicht hat,
und durch das
der zentrale Computer (DAC), das Identifikationsgerät und der Transaktionsprovider, und die Datenbanken (A, B, C und A', B') in einer derartigen gegenseitigen Zusammenschaltung angeordnet sind, dass jegliches Kombinieren der Daten aus der Transaktions-Datenbank (A') und der Personen-Datenbank(B) oder aus der Transaktions-Datenbank (A') und der Personen-Identifikations-Datenbank (B') nur möglich ist auf der Basis vom Empfang angemessener Identifikation und gleichzeitig durch das Erzeugen von Bonuspunkten und deren Eintragen in der Bonus-Datenbank (C).

2. Gerät nach Anspruch 1, **dadurch gekennzeichnet, dass**
der zentrale Computer (DAC), das Identifikationsgerät und der Transaktionsprovider, und die Datenbanken (A, B, C und A', B') in einer derartigen gegenseitigen Zusammenschaltung angeordnet sind, dass jegliches Kombinieren von den Daten aus der Transaktions-Datenbank (A') und der Personen-Datenbank(B) oder aus der Transaktions-Datenbank (A') und der Personen-Identifikations-Datenbank (B') möglich ist auf der Basis vom einmaligen Genehmigen und dem Unterbreiten der Identifikationsdaten, jedes Mal vor dem Kombinieren der Daten, die aus den Datenbanken (A' und B oder A' und B') empfangen wurden, und gleichzeitig durch das Erzeugen von Bonuspunkten und deren Eintragen in der Bonus-Datenbank (C).

3. Gerät nach Anspruch 1, **dadurch gekennzeichnet, dass**
der zentrale Computer (DAC), das Identifikationsgerät und der Transaktionsprovider, und die Datenbanken (A, B, C und A', B') in einer derartigen gegenseitigen Zusammenschaltung angeordnet sind, dass jegliches Kombinieren von den Daten aus der Transaktions-Datenbank (A') und der Personen-Datenbank(B) oder aus der Transaktions-Datenbank (A') und der Personen-Identifikations-Datenbank (B') möglich ist auf der Basis vom Empfang sowohl der Genehmigungs-, als auch der Identifikationsdaten vor jedem Kombinieren der Daten, die aus den Datenbanken (A' und B' oder A' und B) empfangen werden, und gleichzeitig durch das Erzeugen von Bonuspunkten und deren Eintragen in der Bonus-Datenbank (C).

4. Gerät nach einem der vorhergehenden Ansprüche 1 bis 3, **dadurch gekennzeichnet, dass** das Identifikationsgerät Folgendes umfasst:
eine Personen-Identifikations-Datenbank (B'),
eine Personen-Datenbank (B),
eine Transaktions-Datenbank (A'),
eine Bonus-Datenbank (C), und
eine Personen-Transaktions-Datenbank (A) im zentralen Rechner (DAC).

5. Gerät nach einem der vorhergehenden Ansprüche 1 bis 4, **dadurch gekennzeichnet, dass** die Bonus-Datenbank (C) auf dem zentralen Rechner (DAC) angeordnet ist.

6. Gerät nach einem der vorhergehenden Ansprüche 1 bis 4, **dadurch gekennzeichnet, dass** die Bonus-Datenbank (C) auf dem Identifikationsgerät angeordnet ist.

7. Gerät nach einem der vorhergehenden Ansprüche 1 bis 4, **dadurch gekennzeichnet, dass** die Bonus-Datenbank (C) sowohl an dem Identifikationsgerät, als auch auf dem zentralen Rechner (DAC) angeordnet ist.

8. Gerät nach einem der vorhergehenden Ansprüche 1 bis 4, **dadurch gekennzeichnet, dass** die Personen-Datenbank (B) auf dem zentralen Rechner (DAC) angeordnet ist.

9. Gerät nach einem der vorhergehenden Ansprüche 1 bis 4, **dadurch gekennzeichnet, dass** die Personen-Datenbank (B) auf dem Identifikationsgerät angeordnet ist.

10. Gerät nach einem der vorhergehenden Ansprüche 1 bis 4, **dadurch gekennzeichnet, dass** die Personen-Datenbank (B) sowohl auf dem Identifikationsgerät, als auch auf dem zentralen Rechner (DAC) angeordnet ist.

11. Gerät nach einem der vorhergehenden Ansprüche, **dadurch gekennzeichnet, dass** das Transaktions-Provider-Gerät mit mindestens einem Identifikationsgerät funktionell verbunden ist.

12. Gerät nach Anspruch 11, **dadurch gekennzeichnet, dass** das Transaktions-Provider-Gerät, das mit mindestens einem Identifikationsgerät funktionell verbunden ist, ein Fernsehgerät (TV) ist.

13. Gerät nach Anspruch 11, **dadurch gekennzeichnet, dass** das Transaktions-Provider-Gerät, das mit mindestens einem Identifikationsgerät funktionell verbunden ist, ein POS-Terminal ist.

14. Gerät nach Anspruch 11, **dadurch gekennzeichnet, dass** das Transaktions-Provider-Gerät, das mit mindestens einem Identifikationsgerät funktionell verbunden ist, ein Mobiltelefon ist.

15. Gerät nach Anspruch 11, **dadurch gekennzeichnet, dass** das Transaktions-Provider-Gerät, das mit mindestens einem Identifikationsgerät funktionell verbunden ist, ein globales Computernetzwerk (INTERNET) ist.

16. Gerät nach den Ansprüchen 11 bis 15, **dadurch gekennzeichnet, dass** das Identifikationsgerät eine Chipkarte ist.

17. Gerät nach den Ansprüchen 11 bis 16, **dadurch gekennzeichnet, dass** das Identifikationsgerät eine Magnetkarte ist.

18. Gerät nach den Ansprüchen 11 bis 15, **dadurch gekennzeichnet, dass** das Identifikationsgerät ein Strichcode-Etikett ist.

19. Gerät nach den Ansprüchen 11 bis 15, **dadurch gekennzeichnet, dass** das Identifikationsgerät ein biometrisches Identifikationsgerät ist.

20. Gerät nach den Ansprüchen 11 bis 19, **dadurch gekennzeichnet, dass** das Identifikationsgerät ein Fernsteuergerät ist, und zwar ein über große Entfernungen operierendes Identifikationsgerät.

21. Gerät nach Anspruch 20, **dadurch gekennzeichnet, dass** das Identifikationsgerät ein Mobiltelefon (GSM) ist.

22. Gerät nach Anspruch 20, **dadurch gekennzeichnet, dass** das Identifikationsgerät ein Infrarot-Fernbedienungs-Gerät ist.

23. Gerät nach den Ansprüchen 16 bis 22, **dadurch gekennzeichnet, dass** das Identifikationsgerät durch das Benutzen eines PIN-Codes operiert.

24. Gerät nach einem der Ansprüche 1 bis 4, **dadurch gekennzeichnet, dass** die Personen-Transaktions-Datenbank (A) sowohl auf dem Identifikationsgerät, als auch auf dem zentralen Rechner (DAC) angeordnet ist.

25. Gerät nach einem der Ansprüche 1 bis 4, **dadurch gekennzeichnet, dass** die Transaktions-Datenbank (A') sowohl auf dem Identifikationsgerät, als auch auf dem Transaktions-Provider-Gerät angeordnet ist.

26. Gerät nach einem der Ansprüche 1 bis 4, **dadurch gekennzeichnet, dass** die Transaktions-Datenbank (A'), die Personen-Identifikations-Datenbank (B') und die Bonus-Datenbank (C) auf dem Identifikationsgerät angeordnet sind.

27. Gerät nach einem der Ansprüche 1 bis 4, **dadurch gekennzeichnet, dass** die Personen-Transaktions-Datenbank (A), die Personen-Datenbank (B) und die Bonus-Datenbank (C) auf dem Identifikationsgerät angeordnet sind.

28. Gerät nach den Ansprüchen 26 bis 27, **dadurch gekennzeichnet, dass** das Identifikationsgerät eine Chipkarte ist.

## Revendications

1. Dispositif pour permettre l'échange volontaire de données pour des points bonus, incluant des points électroniques, comprenant au moins un ordinateur central (DAC), au moins un dispositif prestataire de transaction et au moins un dispositif d'identification, dans lequel l'ordinateur central (DAC) inclut au moins une base de données de transaction-personnelle (A) qui contient des données relatives aux transactions effectuées en combinaison avec les données relatives à la personne, qui a effectué la transaction et a approuvé la combinaison des données de la transaction avec les données personnelles, c'est à dire au moins suffisamment de données relatives à la personne pour permettre une identification sans ambiguïté de la personne,
le dispositif prestataire de transaction inclut au moins une base de données de transaction (A'), qui contient uniquement les données relatives aux transactions effectuées, sans aucune donnée relative à une personne, qui a effectué la transaction et a approuvé la combinaison des données de transaction avec les données personnelles,
le dispositif d'identification comprend au moins une base de données d'identification personnelle (B'), qui contient les données relatives à une personne, qui a effectué la transaction et approuve la combinaison des données de transaction avec les données personnelles, c'est à dire au moins suffisamment de données relatives à cette personne pour permettre une identification sans ambiguïté de cette personne,
par lequel
au même moment, au moins une base de données de bonus (C) contenant les données relatives aux points bonus acquis est disponible, soit sur l'ordinateur central (DAC), soit sur le dispositif d'identification,
et en outre, une base de données (B) est disponible soit sur l'ordinateur central (Dac), soit sur le dispositif d'identification, laquelle base de données (B) contient l'ensemble des données relatives à la personne, qui a effectué la transaction et qui, par cette approbation, permet la combinaison des données de transaction avec les données personnelles,
et par lequel
lesdits ordinateur central (DAC), dispositif d'identification et prestataire de transaction et lesdites bases de données (A,B,C et A', B') sont agencés en une interconnexion mutuelle telle que toute combinaison des données de la base de données de transaction (A') et de la base de données personnelle (B) ou de la base de données de transaction (A') et de la base de données d'identification personnelle (B') soit possible uniquement en obtenant l'identification adéquate et en générant simultanément les points bonus et en les écrivant dans la base de données de bonus (C).

2. Dispositif selon la revendication 1, **caractérisé en ce que**
lesdits ordinateur central (DAC), dispositif d'identification et prestataire de transaction et lesdites bases de données (A,B,C et A', B') sont agencés en une interconnexion mutuelle telle que toute combinaison des données de la base de données de transaction (A') et de la base de données personnelle (B) ou de la base de données de transaction (A') et de la base de données d'identification personnelle (B') soit possible sur la base d'une approbation unique et en soumettant les données d'identification à chaque fois avant la combinaison des données obtenues à partir desdites bases de données (A' et B ou A' et B'), ainsi qu'en générant au même moment les points bonus et en les écrivant dans la base de données de bonus (C).

3. Dispositif selon la revendication 1, **caractérisé en ce que**
lesdits ordinateur central (DAC), dispositif d'identification et prestataire de transaction et lesdites bases de données (A,B,C et A', B') sont agencés en une interconnexion mutuelle telle que toute combinaison des données de la base de données de transaction (A') et de la base de données personnelle (B) ou de la base de données de transaction (A') et de la base de données d'identification personnelle (B') soit possible en obtenant à la fois les données d'approbation et d'identification avant chaque combinaison des données obtenues à partir desdites bases de données (A' et B' ou A' et B) ainsi qu'en générant au même moment les points bonus et en les écrivant dans la base de données de bonus (C).

4. Dispositif selon l'une quelconque des revendications précédentes 1 à 3, **caractérisé en ce que** le dispositif d'identification comprend une base de données d'identification personnelle (B'),
une base de données personnelle (B),
une base de données de transaction (A'),
une base de données de bonus (C) et
une base de données personnelle-transaction (A)située dans l'ordinateur central (DAC).

5. Dispositif selon l'une quelconque des revendications 1 à 4, **caractérisé en ce que** la base de données de bonus(C) se trouve sur l'ordinateur central (DAC).

6. Dispositif selon l'une quelconque des revendications 1 à 4, **caractérisé en ce que** la base de données de bonus (C) se trouve sur le dispositif d'identification.

7. Dispositif selon l'une quelconque des revendications 1 à 4, **caractérisé en ce que** la base de données de bonus (C) se trouve à la fois sur le dispositif d'identification et sur l'ordinateur central (DAC).

8. Dispositif selon l'une quelconque des revendications 1 à 4, **caractérisé en ce que** la base de données personnelle (B) se trouve sur l'ordinateur central (DAC).

9. Dispositif selon l'une quelconque des revendications 1 à 4, **caractérisé en ce que** la base de données personnelle (B) se trouve sur le dispositif d'identification.

10. Dispositif selon l'une quelconque des revendications 1 à 4, **caractérisé en ce que** la base de données personnelles (B) se trouve à la fois sur le dispositif d'identification et sur l'ordinateur central (DAC).

11. Dispositif selon l'une quelconque des revendications précédentes, **caractérisé en ce que** le dispositif prestataire de transaction est lié fonctionnellement à au moins un dispositif d'identification.

12. Dispositif selon la revendication 11, **caractérisé en ce que** le dispositif prestataire de transaction, qui est lié fonctionnellement à au moins un dispositif d'identification, est un téléviseur (TV).

13. Dispositif selon la revendication 11, **caractérisé en ce que** le dispositif prestataire de transaction, qui est lié fonctionnellement à au moins un dispositif d'identification, est un terminal point de service (POS-terminal).

14. Dispositif selon la revendication 11, **caractérisé en ce que** le dispositif prestataire de transaction, qui est lié fonctionnellement à au moins un dispositif d'identification, est un téléphone portable.

15. Dispositif selon la revendication 11, **caractérisé en ce que** le dispositif prestataire de transaction, qui est lié fonctionnellement à au moins un dispositif d'identification, est un réseau mondial d'ordinateurs (INTERNET).

16. Dispositif selon les revendications 11 à 15, **caractérisé en ce que** le dispositif d'identification est une carte à puce.

17. Dispositif selon les revendications 11 à 16, **caractérisé en ce que** le dispositif d'identification est une carte magnétique.

18. Dispositif selon les revendications 11 à 15, **caractérisé en ce que** le dispositif d'identification est une étiquette à code barre.

19. Dispositif selon les revendications 11 à 15, **caractérisé en ce que** le dispositif d'identification est un dispositif d'identification biométrique.

20. Dispositif selon l'une quelconque des revendications 11 à 19, **caractérisé en ce que** le dispositif d'identification est un dispositif fonctionnant à distance, à savoir un dispositif d'identification fonctionnant sur de longues distances.

21. Dispositif selon la revendication 20, **caractérisé en ce que** le dispositif d'identification est un téléphone portable (GSM).

22. Dispositif selon la revendication 20, **caractérisé en ce que** le dispositif d'identification est un dispositif commandé à distance à infrarouges.

23. Dispositif selon les revendications 16 à 22, **caractérisé en ce que** le dispositif d'identification est mis en fonction au moyen d'un code PIN.

24. Dispositif selon l'une quelconque des revendications 1 à 4, **caractérisé en ce que** la base de données personnelle-transaction (A) se trouve à la fois sur le dispositif d'identification et sur l'ordinateur central (DAC).

25. Dispositif selon l'une quelconque des revendications 1 à 4, **caractérisé en ce que** la base de données de transaction (A') se trouve à la fois sur le dispositif d'identification et sur le dispositif prestataire de transaction.

26. Dispositif selon l'une quelconque des revendications 1 à 4, **caractérisé en ce que** la base de données de transaction (A'), la base de données d'identification personnelle (B') et la base de données de bonus (C) se trouvent sur le dispositif d'identification.

27. Dispositif selon l'une quelconque des revendications 1 à 4, **caractérisé en ce que** la base de données personnelle-transaction (A), la base de données personnelle (B) et la base de données de bonus (C) se trouvent sur le dispositif d'identification.

28. Dispositif selon les revendications 26 et 27, **caractérisé en ce que** le dispositif d'identification est une carte à puce.
